# DEMANDE DE BREVET EUROPEEN

(11) **EP 1 398 200 A1**
(43) Date de publication de la demande: **17.03.2004**
(21) Numéro de dépôt: 03292151.2
(22) Date de dépôt: 02.09.2003
(51) Int. Cl.: B60K 11/04, F01P 7/16, F01P 3/20

(54) **Système de refroidissement d'une chaîne de traction hybride pour véhicule automobile**

(30) Priorité: 06.09.2002 FR 0211059
(71) Demandeur: Renault s.a.s., 92100 Boulogne Billancourt (FR)
(72) Inventeur: Rouaud, Cédric, 92370 Chaville (FR); Yu, Robert, 78990 Elancourt (FR)
(74) Mandataire: Rougemont, Bernard

(57) **Abrégé**

L'invention concerne un système de refroidissement pour chaîne de traction hybride de véhicule, dans lequel circule un fluide refroidi dans un radiateur composé d'un circuit principal de refroidissement du moteur thermique à plusieurs passes, et d'un circuit auxiliaire dédié au refroidissement de la chaîne de traction électrique, à plusieurs passes et relié au circuit principal, dont la sortie auxiliaire permet le passage du fluide, refroidi à une température inférieure à celle de la sortie principale, vers la chaîne de traction électrique, tel que ledit radiateur (1) possède de plus une branche de dérivation (9) du liquide provenant du moteur thermique (3) reliant l'entrée (E) à une première entrée d'une vanne (10) mélangeuse à trois voies, placée à la sortie auxiliaire (Sₐ) et recevant par une deuxième entrée le fluide provenant du circuit auxiliaire, et assurant le passage sélectif du fluide de refroidissement de la chaîne de traction électrique (5) par la sortie auxiliaire.

## Description

La présente invention concerne un système de refroidissement d'une chaîne de traction hybride pour véhicule automobile.

Un véhicule à propulsion ou traction hybride est équipé d'une première source de propulsion et/ou d'un générateur d'électricité matérialisée par un moteur thermique, et d'une seconde source de propulsion et/ou de transformation de l'énergie électrique en énergie mécanique, matérialisée par un ou plusieurs moteurs électriques.

Le moteur thermique et les moteurs électriques ainsi que les composants électroniques de puissance contrôlant le fonctionnement des moteurs électriques ne nécessitent pas le même degré de refroidissement pour fonctionner dans les conditions prévues. Les plages de température des fluides de refroidissement des différents éléments ne sont pas les mêmes. Ainsi, le fluide de refroidissement en entrée des composants électroniques ne doit pas dépasser 80°C, alors que la température en entrée du moteur électrique ou de l'échangeur de chaleur entre l'eau et l'huile de refroidissement des moteurs électriques ne doit pas excéder 90°C et celle en entrée du moteur thermique est limitée à 105°C.

Les solutions actuelles utilisent généralement des circuits de refroidissement distincts : un premier circuit pour le moteur thermique correspondant au circuit conventionnel de refroidissement d'un moteur thermique avec un premier radiateur et un second circuit pour le refroidissement de la chaîne de traction électrique comprenant au moins un moteur électrique et des composants électroniques de puissance. Ce type de système de refroidissement présente un premier inconvénient lorsque les composants électroniques sont en fonctionnement car la pompe électrique du deuxième circuit de refroidissement de la chaîne de traction électrique fonctionne en permanence. Un autre inconvénient est dû à la position du radiateur de ce même circuit, qui est placé devant le radiateur de refroidissement du moteur thermique, ce qui crée des pertes de charge sur l'air supplémentaires entraînant un mauvais refroidissement par air. De plus, ce système ne permet pas le préchauffage du moteur ou le maintien en température du liquide de refroidissement de ce moteur quand celui-ci est à l'arrêt.

Un autre type de solution est décrit dans le brevet japonais JP 1 0266855, déposé au nom de TOYOTA, concernant un système de refroidissement qui comporte un radiateur à deux entrées et deux sorties. Au moteur thermique d'une part et aux composants de la chaîne de traction électrique d'autre part sont attribuées une entrée et une sortie. Cette solution a peu d'intérêt car le fluide circulant dans le moteur thermique ne se mélange presque pas au fluide refroidissant les composants électriques.

Une solution utilisant un seul circuit de refroidissement, celui du moteur thermique à hautes températures, entre 90 et 115°C, pour refroidir de plus les composants de la chaîne de traction électrique à plus basses températures, entre 70 et 80°C, est décrite dans le brevet français FR 0 100109 au nom de RENAULT. Il utilise un radiateur à une entrée et deux sorties, avec un sous-refroidissement supplémentaire pour obtenir un fluide à plus basse température au niveau de la deuxième sortie destinée aux organes des composants électriques et électroniques.

Le but de l'invention est de pallier les inconvénients précités en proposant un système de refroidissement qui respectent les niveaux de température requis, tout en étant de réalisation simple et peu coûteuse.

Pour cela, l'objet de l'invention est un système de refroidissement pour chaîne de traction hybride de véhicule comprenant un moteur thermique et une chaîne de traction électrique, dans lequel circule un fluide de refroidissement des moteurs, refroidi dans un radiateur composé d'une part d'un circuit principal à plusieurs passes de multiples canaux parallèles reliés par des boîtes à eau, dédié au refroidissement du moteur thermique et possédant une entrée reliée à la sortie du moteur thermique et une sortie principale reliée à l'entrée dudit moteur thermique, et d'autre part d'un circuit auxiliaire dédié au refroidissement de la chaîne de traction électrique, relié au circuit principal et constitué également de plusieurs passes dont la sortie auxiliaire permet le passage du fluide, refroidi à une température inférieure à celle de la sortie principale, vers la chaîne de traction électrique, caractérisé en ce que ledit radiateur possède de plus une branche de dérivation du liquide provenant du moteur thermique reliant l'entrée à une première entrée d'une vanne mélangeuse à trois voies, placée au niveau de la sortie auxiliaire et recevant par une deuxième entrée le fluide refroidi provenant du circuit auxiliaire, et assurant le passage sélectif du fluide destiné au refroidissement de la chaîne de traction électrique par la sortie auxiliaire.

Selon une autre caractéristique de l'invention, le circuit principal du radiateur, dédié au refroidissement du moteur thermique, et le circuit auxiliaire, dédié au refroidissement de la chaîne de traction électrique, ont chacun un nombre pair de passes de telle sorte que les deux sorties principale et auxiliaire du radiateur sont situées du même côté du radiateur et la branche de dérivation du fluide est interne au radiateur, réalisée par une cloison parallèle aux boîtes à eau assurant le passage du fluide provenant du moteur thermique de l'entrée du radiateur vers la vanne mélangeuse.

Selon une autre caractéristique de l'invention, le circuit principal du radiateur, dédié au refroidissement du moteur thermique, et le circuit auxiliaire, dédié au refroidissement de la chaîne de traction électrique, ont chacun un nombre impair de passes de telle sorte que les deux sorties principale et auxiliaire du radiateur sont situées du même côté du radiateur et la branche de dérivation du fluide est interne au radiateur, réalisée par une cloison parallèle aux boîtes à eau assurant le passage du fluide provenant du moteur thermique de l'entrée du radiateur vers la vanne mélangeuse.

Selon une autre caractéristique de l'invention, la sortie du circuit de refroidissement auxiliaire du radiateur est placée du côté opposé à l'entrée du fluide provenant du moteur thermique, en raison de la différence de parité du nombre de passes entre les deux circuits principal et auxiliaire de refroidissement du radiateur, et la branche de dérivation du liquide est réalisée par un raccord spécifique extérieur au radiateur entre la sortie du moteur thermique et la vanne mélangeuse.

Selon une autre caractéristique de l'invention, la vanne mélangeuse à trois voies, placée au niveau de la sortie auxiliaire du radiateur, est constituée d'un boîtier rigide et étanche à deux entrées opposées et perpendiculaires à une sortie, une première entrée recevant le fluide provenant du moteur thermique et la seconde entrée recevant le fluide provenant du circuit auxiliaire de refroidissement du radiateur, dans lequel est logé un thermostat à cire comprenant deux clapets disposés aux deux extrémités d'un bulbe à cire, se déplaçant le long d'une tige solidaire du boîtier sous l'effet de la température du fluide baignant le bulbe, et disposés perpendiculairement à cette tige, destinés à faire varier progressivement et inversement les flux venant simultanément par les deux entrées pour réguler la température du fluide de refroidissement en sortie du boîtier vers la chaîne de traction électrique.

Selon une autre caractéristique de l'invention, la vanne mélangeuse est constituée de deux thermostats à cire, logés selon le même axe de déplacement dans un boîtier à deux entrées opposées et une sortie par laquelle circule le fluide de refroidissement destiné à la chaîne de traction électrique, chacun des thermostats étant doté d'un clapet destiné à buter contre un siège pour fermer alternativement les entrées de la vanne et les deux sièges étant parallèles, solidaires du boîtier de la vanne et disposés de part et d'autre de la sortie.

D'autres caractéristiques et avantages de l'invention apparaîtront à la lecture de la description de plusieurs modes de réalisation non limitatifs, illustrée par les figures suivantes qui sont :
- la figure 1 : une vue schématique d'un système de refroidissement selon l'invention, d'après un premier mode de réalisation ;
- les figures 2 à 4 : des vues schématiques en coupe longitudinale d'une vanne mélangeuse avec un thermostat à cire à double clapet, selon l'invention ;
- la figure 5 : une vue schématique en coupe longitudinale d'un thermostat à cire à double clapet ;
- les figures 6ₐ , 6_{b} et 6_{c} : des vues schématiques en coupe longitudinale d'une vanne mélangeuse avec deux thermostats à cire, selon l'invention ;
- les figures 7 et 8 : des vues schématiques d'un radiateur de système de refroidissement, selon l'invention ;
- la figure 9 : une vue schématique d'un système de refroidissement selon l'invention, d'après un deuxième mode de réalisation ;
- les figures 10ₐ et 10_{b} : des vues schématiques d'un système de refroidissement selon l'invention, en mode de fonctionnement thermique du véhicule ;
- les figures 11ₐ, 10_{b} et 11_{c} : des vues schématiques d'un système de refroidissement selon l'invention, en mode de fonctionnement électrique du véhicule ;
- les figures 12ₐ, 12_{b} et 12_{c} : des vues schématiques d'un système de refroidissement selon l'invention, en mode de fonctionnement hybride du véhicule ;

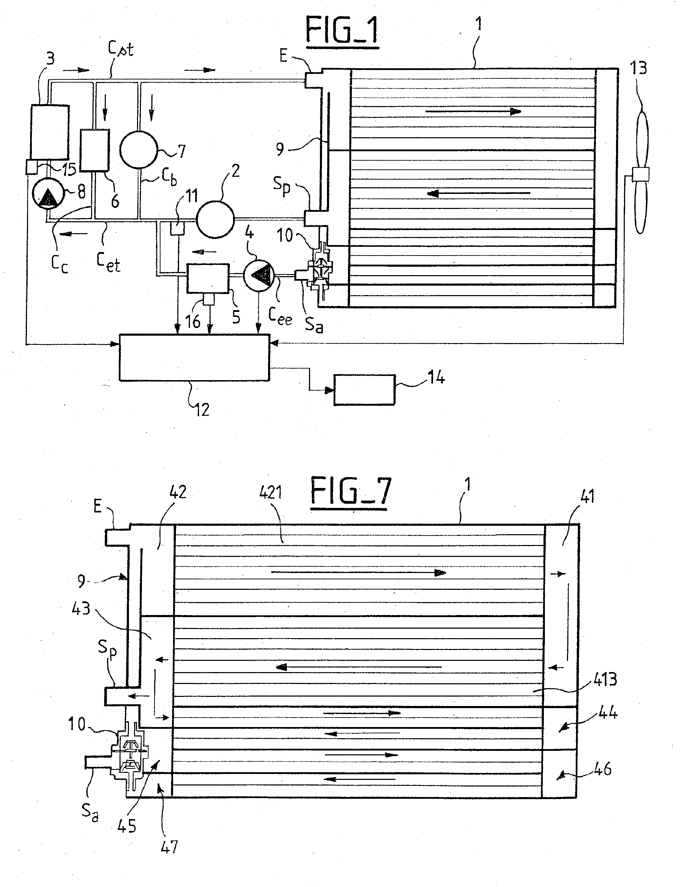

Comme le montre le schéma de la figure 1, la chaîne de traction ou propulsion hybride d'un véhicule automobile comporte d'une part un moteur thermique 3 et d'autre part une chaîne de traction électrique 5, composée d'un ou plusieurs moteurs électriques associés à des composants électroniques de puissance auxquels peut être ajouté un échangeur entre l'huile pour leur refroidissement et l'eau pour le refroidissement du moteur thermique.

Il est prévu de plus un radiateur de chauffage 6 de l'habitacle et un bocal de dégazage 7. Un ensemble de capteurs 15 donne des informations sur le fonctionnement du moteur thermique, son régime, la température du liquide de refroidissement en sortie de la culasse. De plus, au moins un capteur de température 16 est placé en entrée des composants électroniques, dans la chaîne de traction électrique 5 pour connaître la valeur de la température du liquide de refroidissement qui ne doit pas dépasser un seuil déterminé.

Le système de refroidissement proprement dit comprend un radiateur 1 à une entrée E et deux sorties Sₚ et Sₐ dans lequel circule un fluide de refroidissement, sortant du moteur thermique. Le radiateur est composé d'une part d'un circuit principal à plusieurs passes de multiples canaux parallèles dédié au refroidissement du moteur thermique 3 et possédant une entrée E reliée par une première conduite Cₛₜ à la sortie du moteur thermique et une sortie principale Sₚ reliée par une deuxième conduite Cₑₜ à une pompe 8 entraînant le fluide de refroidissement vers l'entrée dudit moteur thermique. D'autre part, il est composé d'un circuit auxiliaire dédié au refroidissement de la chaîne de traction électrique, relié au circuit principal et constitué également de plusieurs passes dont la sortie auxiliaire Sₐ permet le passage du fluide, refroidi à une température inférieure à celle de la sortie principale, vers une troisième conduite Cₑₑ reliée à la chaîne de traction électrique. Ainsi, le fluide se divise en deux flux, l'un passant par la sortie principale et l'autre effectuant au moins une autre passe pour profiter d'un échange thermique de plus longue durée, puis sortant du radiateur à une température inférieure à celle du flux passant par la sortie principale. Dans certains cas, l'un de ces flux est nul.

La pompe 8, placée entre la sortie principale Sₚ du radiateur 1 et le moteur thermique 3, est soit mécanique entraînée par ce moteur, soit électrique.

Un thermostat à cire 2 est placé au niveau de la sortie principale Sₚ du radiateur pour permettre une montée en température rapide du fluide de refroidissement dans la canalisation Cet d'entrée du moteur thermique ainsi qu'un refroidissement correct lors des fonctionnements plus contraignants.

Une pompe électrique 4 est placée dans la conduite Cₑₑ qui relie la sortie auxiliaire Sₐ du radiateur 1 et les composants de la chaîne de traction électrique 5. Elle fonctionne quand le véhicule est en mode électrique pur ou quand le thermostat 2 est ouvert. Cette pompe peut être supprimée dans les cas où le débit ou la quantité de chaleur à évacuer des composants 5 est faible.

Au niveau du thermostat 2, est placé un capteur de température 11 destiné à donner une information sur sa position d'ouverture variant avec la température du fluide de refroidissement dans la canalisation Cₑₜ d'entrée du moteur. Le radiateur 1 comporte un nombre de passes suffisant entre la sortie principale Sₚ vers le moteur thermique 3 et la sortie auxiliaire Sₐ vers les composants électroniques 5, pour permettre un refroidissement supplémentaire suffisant à la deuxième sortie.

Le radiateur de chauffage 6 et le bocal de dégazage 7 sont placés en parallèle du circuit de refroidissement du moteur thermique 3, au moyen de deux canalisations C_{c} et C_{b}.

Une unité de contrôle 12 du système de refroidissement est reliée notamment aux capteurs de température 11, 15 et 16, à la pompe électrique 4 pour dialoguer avec le calculateur électronique 14 de l'unité de contrôle du véhicule hybride et à un ventilateur 13 qui est déclenché pour une température d'eau de 80 °C en entrée des composants électroniques.

Selon une caractéristique essentielle de l'invention, le radiateur 1 est doté d'une branche de dérivation 9, reliant son entrée E à sa sortie auxiliaire Sₐ, destinée au refroidissement des composants électriques 5, par l'intermédiaire d'une vanne mélangeuse 10 à trois voies. La branche 9 et la vanne 10 permettent de by-passer le radiateur 1 lors d'un démarrage à froid et de réguler la température du fluide de refroidissement à l'entrée des composants de la chaîne de traction électrique 5, par le mélange entre le fluide venant de l'entrée E et celui refroidi par le circuit auxiliaire de radiateur.

La vanne mélangeuse 10 à trois voies permet le mélange du liquide chaud provenant du moteur thermique avec le liquide de température plus basse refroidi par l'ensemble du radiateur. Elle peut être réalisée à partir d'un thermostat à double clapet ou d'un double thermostat à simple clapet.

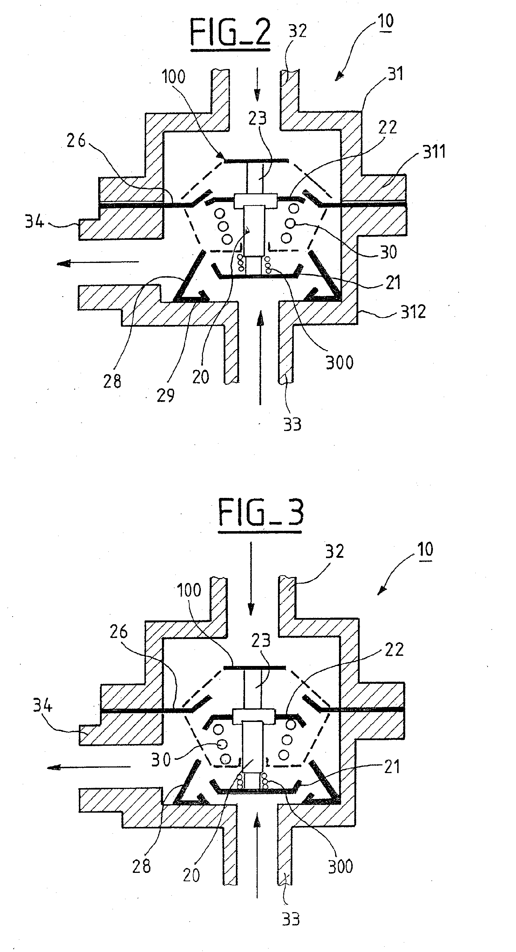

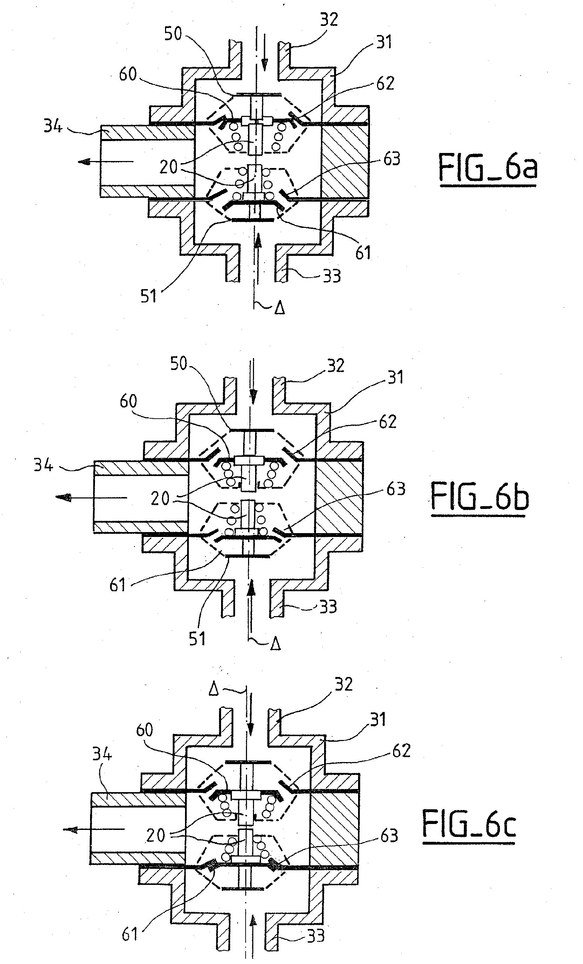

La figure 2 est une vue schématique d'un premier exemple de réalisation d'une vanne mélangeuse à trois voies, réalisée par un thermostat à cire, à double clapet et la figure 5 est une vue schématique en coupe longitudinale d'un thermostat à cire 100. La vanne comprend un boîtier 31 rigide et étanche, à deux entrées 32 et 33 opposées l'une à l'autre et une sortie 34 perpendiculaire auxdites entrées. Une des entrées 33 reçoit le fluide provenant du moteur thermique 3 et l'entrée opposée 32 reçoit le fluide refroidi par le circuit auxiliaire de refroidissement. Dans ce boîtier est logé un thermostat à cire 100, possédant deux clapets 21 et 22 disposés chacun à une extrémité d'un bulbe de cire 20 pouvant se déplacer le long d'une tige 23, solidaire du boîtier, sous l'effet de la température du fluide baignant le bulbe. Des ressorts 30 et 300 maintiennent les clapets 22 et 21 solidaires du bulbe de cire 20 contre le siège fixe 26, et ramènent le clapet 22 vers son siège 26 lorsque la cire se contracte. En effet, lorsque la température du liquide provenant du moteur thermique dépasse un seuil d'environ 70°C, la cire se dilate dans le bulbe qui glisse le long de la tige 23. Les clapets 21 et 22 sont disposés perpendiculairement à cette tige et leur déplacement permet de faire varier progressivement et en sens inverse les flux venant simultanément par les deux entrées de fluide, de façon à réguler la température du fluide de refroidissement en sortie 34 du boîtier 31 vers la chaîne de traction électrique.

L'ensemble des éléments constituant la vanne 10 est réalisé en matériau ne se corrodant pas au contact du liquide de refroidissement.

Comme le montre la vue de la figure 2 correspondant à un fonctionnement à froid, la cire dans le bulbe est solide et le thermostat est positionné dans le boîtier 31 de telle sorte que le clapet 22 est en butée contre un siège 26 qui est solidaire dudit boîtier. Ce siège peut être coincé entre les parois du boîtier, si celui-ci est réalisé en deux parties 311 et 312. Ainsi, l'arrivée du fluide provenant du circuit auxiliaire de refroidissement du radiateur est obstruée complètement et seul passe le liquide provenant du moteur thermique, qui passe ensuite par la sortie auxiliaire Sₐ pour être envoyé vers la pompe électrique 4 et la chaîne de traction électrique 5. Pour assurer un meilleur écoulement du fluide autour du bulbe 20, il est prévu une partie fixe de forme tronconique, solidaire du boîtier 31 et associée à une rondelle entourant l'entrée 33 et servant de siège 28 au clapet 21. Un joint de caoutchouc 29 bordant la circonférence interne du siège assure l'étanchéité du contact entre le clapet 21 et son siège 28.

Quand la température du fluide provenant du moteur thermique augmente et dépasse le seuil de 70°C, la cire commence à se dilater, ce qui entraîne le glissement du bulbe 20 le long de la tige 23 et le déplacement des deux clapets 21 et 22. Le fluide ayant circulé dans tout le radiateur peut alors s'écouler par l'entrée 32 puisque le clapet 22 s'éloigne de son siège 26 et simultanément le clapet 21 se rapproche de son siège 28, diminuant ainsi le débit d'arrivée du liquide provenant du moteur thermique, comme le montre la vue schématique de la figure 3. Pendant la montée en température de ce dernier, donc de la cire, ce liquide chaud se mélange au fluide refroidi autour du bulbe de cire 20.

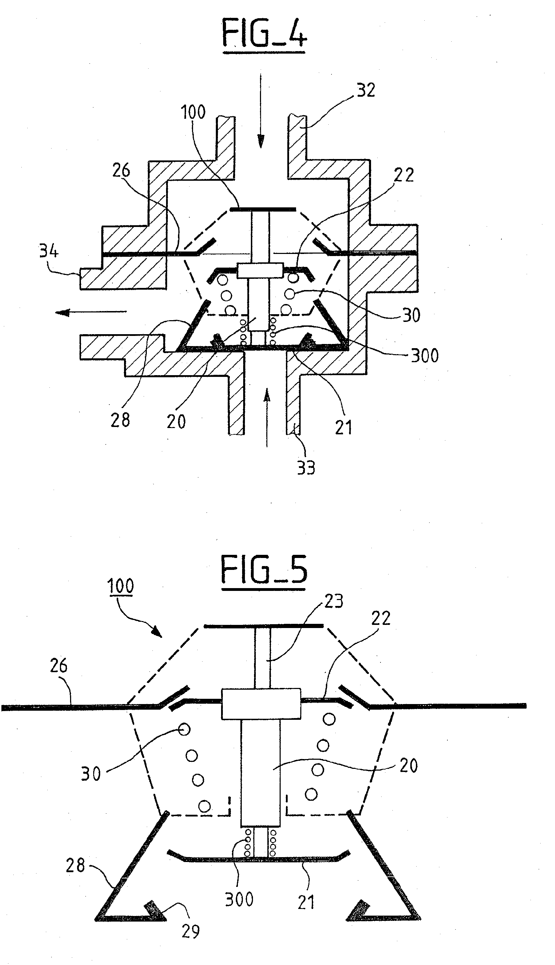

L'arrivée du fluide refroidi par l'entrée 32 tend à refroidir le bulbe 20 qui va se déplacer selon la température du mélange qui l'arrose. Si la température baisse, la cire va se contracter et le déplacement du bulbe va s'inverser, éloignant le clapet 21 de son siège et rapprochant l'autre clapet 22 du sien pour que le fluide provenant du moteur thermique continue à réchauffer le bulbe. La température peut se stabiliser, et le bulbe va rester en position d'ouverture intermédiaire. Par contre, si la température du mélange augmente, le bulbe continue son déplacement jusqu'à la fermeture complète de l'entrée 33 par le clapet 21 en butée contre son siège 28, le fluide refroidi par le circuit auxiliaire continuant à refroidir le bulbe jusqu'à une température suffisante au bon refroidissement de la chaîne de traction électrique qu'il atteint en passant par la sortie 34 (figure 4).

La figure 6ₐ est une vue schématique d'un deuxième exemple de réalisation d'une vanne mélangeuse à deux thermostats à cire 50 et 51, logés selon le même axe Δ de déplacement dans un boîtier 31 à deux entrées opposées 32 et 33 et une sortie 34 par laquelle circule le fluide de refroidissement destiné à la chaîne de traction électrique. Chacun des thermostats 50 et 51 est doté d'un clapet 60, respectivement 61, destiné à buter contre un siège 62, respectivement 63, pour fermer alternativement les entrées 33 et 32 de la vanne. Les deux sièges 62 et 63 sont parallèles, solidaires du boîtier 31 de la vanne et disposés de part et d'autre de la sortie 34.

Lorsque le liquide provenant du refroidissement du moteur thermique est encore à une température inférieure à un seuil de 70°C, la cire des bulbes 20 est solide et le premier thermostat 51 situé dans l'axe de l'entrée 33 de ce liquide est ouvert, positionné de telle sorte que son clapet 61 n'est pas en butée de son siège 63 pour laisser passer le liquide vers la sortie 34 après avoir baigné le bulbe à cire. Simultanément, le second thermostat 50 est fermé, positionné de telle sorte que son clapet 60 soit en butée de son siège 62 pour obstruer totalement l'arrivée 32 du fluide refroidi par le radiateur. Ainsi, le fluide venant du moteur thermique est utilisé pour le refroidissement de la chaîne de traction électrique.

Lorsque la température du fluide de refroidissement du moteur thermique s'élève au-dessus du seuil de dilatation de la cire, les deux bulbes 20 de cire se déplacent l'un vers l'autre pour permettre le mélange des deux fluides chaud et refroidi qui va refroidir les composants électroniques de la chaîne de traction (figure 6_{b}). Quand la température est trop élevée, le thermostat 51 ferme l'entrée 33 et le thermostat 50 ouvre l'entrée 32 afin que seul le fluide refroidi par le circuit auxiliaire du radiateur arrose la cire de deux bulbes (figure 6_{c}).

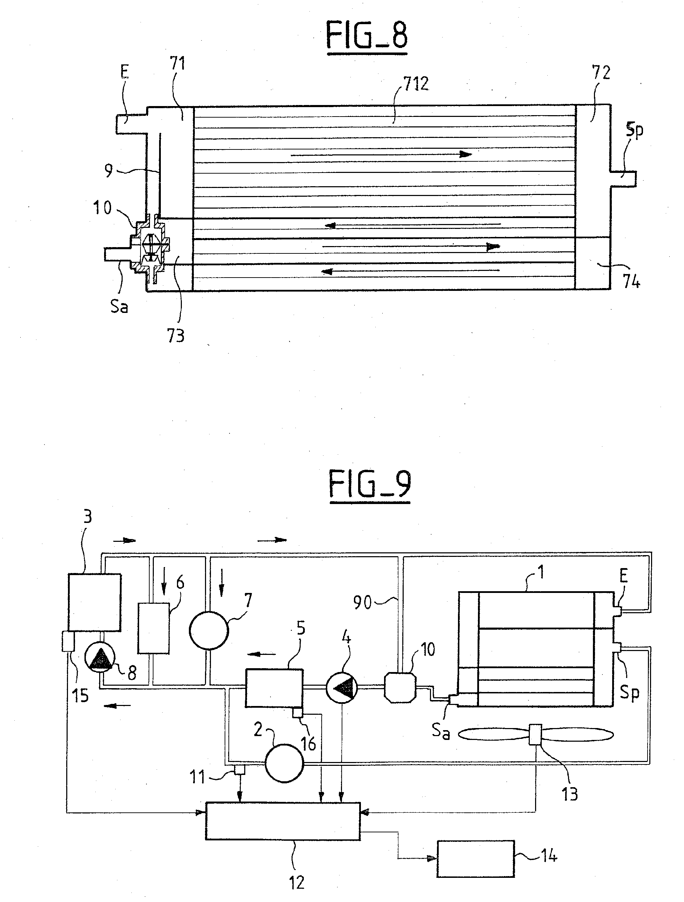

La figure 7 est une représentation schématique d'une variante de réalisation d'un radiateur dont le nombre de passes pour le refroidissement du moteur thermique comme celui pour le refroidissement de la chaîne de traction électrique sont pairs. Ainsi, ce radiateur 1 possède une entrée F par laquelle le fluide venant du moteur thermique 3 pénètre dans une première boîte à eau 42 avant de traverser dans un premier sens de circulation plusieurs canaux parallèles 421 pour aboutir à une deuxième boîte à eau 41 qui communique également avec plusieurs canaux 413 traversés par le fluide dans un deuxième sens de circulation opposé au premier sens. Le liquide ainsi refroidi aboutit dans une troisième boîte à eau 43 avant de sortir par la sortie principale Sₚ vers le moteur thermique, après avoir eu une circulation en U entre l'entrée E et cette sortie Sₚ.

Une partie de ce fluide de refroidissement aboutissant dans la troisième boîte à eau 43 passe ensuite à travers un nombre pair de passes, constituées de plusieurs canaux parallèles, reliées à un nombre pair de boîtes à eau avant de ressortir par la sortie auxiliaire Sₐ du radiateur située du même côté que la sortie principale Sₚ, par l'intermédiaire de la vanne 10 à trois voies. Dans l'exemple de la figure 7, le radiateur comporte quatre boîtes à eau 44 à 47, reliées 2 à 2 par une passe à un sens de circulation du liquide. Une canalisation de dérivation 9, réalisée par une cloison parallèle aux boîtes à eau, permet la circulation d'une partie du liquide, provenant du moteur et arrivant dans la première boîte à eau 42, communiquant avec l'entrée E, directement vers la vanne à trois voies 10 qui est placée au niveau de la sortie auxiliaire Sₐ du radiateur.

La figure 8 est une représentation schématique d'une deuxième variante de réalisation d'un radiateur avec un nombre impair de passes pour les deux circuits de refroidissement du radiateur. Dans le cas particulier de cette figure, le refroidissement du moteur thermique est assuré par le liquide qui arrive par l'entrée E d'un côté du radiateur et qui circule à travers une seule passe à plusieurs tubes parallèles 712, reliant deux boîtes à eau 71 et 72, pour sortir par la sortie principale Sₚ à l'opposée de l'entrée E.

Une partie de ce liquide de refroidissement destiné au moteur thermique traverse ensuite trois passes successivement reliées deux à deux par deux boîtes à eau 73 et 74, pour aboutir enfin à la vanne 10 autorisant ou non son écoulement vers la sortie auxiliaire Sₐ. Une canalisation de dérivation 9, réalisée par une cloison parallèle aux boîtes à eau, permet la circulation d'une partie du liquide, provenant du moteur et arrivant dans la première boîte à eau 71, communiquant avec l'entrée E, directement vers la vanne à trois voies 10 qui est placée au niveau de la sortie auxiliaire Sₐ du radiateur.

Suivant la puissance dissipée par les composants de la chaîne de traction hybride, en fonction du type d'architecture hybride du véhicule, le radiateur 1 aura plus ou moins de passes dédiées au refroidissement du moteur thermique 3 et de passes dédiées à celui des composants de la chaîne de traction électrique. Ainsi, la sortie Sₐ du circuit de refroidissement auxiliaire du radiateur 1 est placée du côté opposé à l'entrée E du fluide provenant du moteur thermique 3, s'il existe une différence de parité du nombre de passes entre les deux circuits principal et auxiliaire de refroidissement, et la branche de dérivation 9 du liquide est alors réalisée par un raccord spécifique extérieur au radiateur 1 entre la sortie du moteur thermique 3 et la vanne mélangeuse 10.

La figure 9 est une représentation schématique d'un système de refroidissement selon l'invention, illustrant cette troisième variante de réalisation du radiateur 1, comprenant un nombre de passes pair pour un des circuits de refroidissement et un nombre de passes impair pour l'autre circuit. Dans le cas de la figure 9, c'est le circuit principal consacré au refroidissement du moteur thermique qui a un nombre pair de passes et le circuit auxiliaire consacré à celui des composants de la chaîne de traction électrique qui est impair. Un tel mode de réalisation ne permet pas de prévoir une canalisation 9 intérieure autorisant le passage du liquide directement de l'entrée E vers la vanne 10 et la sortie auxiliaire Sₐ pour le refroidissement des composants électriques, car l'entrée et la sortie ne sont pas du même côté du radiateur. Ce mode de réalisation nécessite donc un raccord extérieur spécifique 90 tel une durit, en matériau plastique ou autre, entre la sortie du moteur thermique 3 et la vanne 10 à trois voies, qui est placée après la sortie Sₐ du radiateur, et non plus intégrée audit radiateur.

Les éléments portant les mêmes références que sur la figure 1 remplissent les mêmes fonctions en vue des mêmes résultats.

Les figures suivantes sont des vues schématiques d'un système de refroidissement selon l'invention, d'après différents modes de fonctionnement du véhicule, entraînant différentes circulations du fluide de refroidissement. Le radiateur 1 est représenté dans sa troisième variante de réalisation, mais la description est valable pour toutes les variantes décrites auparavant.

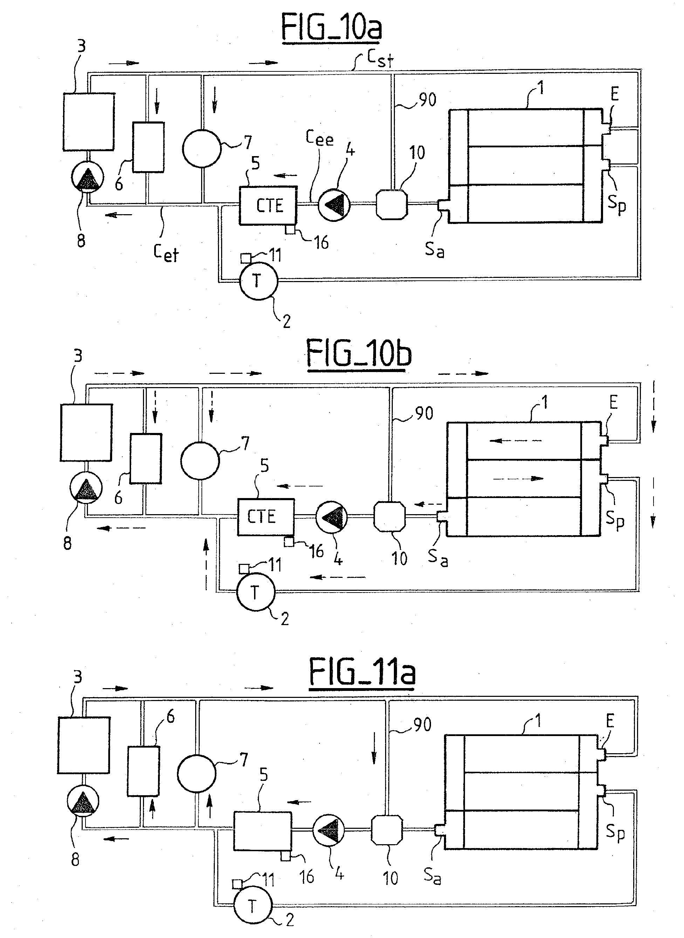

En mode thermique pur à froid (figure 10ₐ) du véhicule hybride, lors d'un démarrage à froid, seule la pompe mécanique 8 entraîne la circulation du liquide de refroidissement, la pompe électrique 4 étant à l'arrêt. L'information issue du capteur de température 16 en entrée des composants de la chaîne de traction électrique 5 est délivrée à l'unité de contrôle du véhicule hybride afin de savoir si le refroidissement de la chaîne de traction électrique s'effectue correctement. En effet, si la température du fluide est supérieure à 80°C, les performances des composants électroniques et du moteur électrique sont dégradées. L'utilisation de la vanne 10 à trois voies permet d'éviter le passage du liquide dans le radiateur de refroidissement ce qui favorise la montée en température du moteur thermique 3. Le sens de circulation du liquide dans les différentes canalisations est symbolisé par des flèches en trait plein.

En mode thermique pur à chaud (figure 10_{b}), c'est-à-dire quand le moteur a une température telle que le liquide de refroidissement est à plus de 80°C, ce dernier doit passer par le radiateur 1. Si le thermostat 2 s'ouvre, le liquide peut passer par la première sortie Sₚ du radiateur. De plus, la température du liquide en sortie du moteur thermique étant supérieure à 80°C, la vanne 10 autorise le passage du liquide par la deuxième sortie Sₐ du radiateur pour que les composants de la chaîne de traction électrique 5, qu'ils soient en fonctionnement ou non, ne soient pas mis en contact avec du liquide très chaud susceptible de les détruire. Le sens de circulation du liquide est symbolisé par des flèches en traits pointillés.

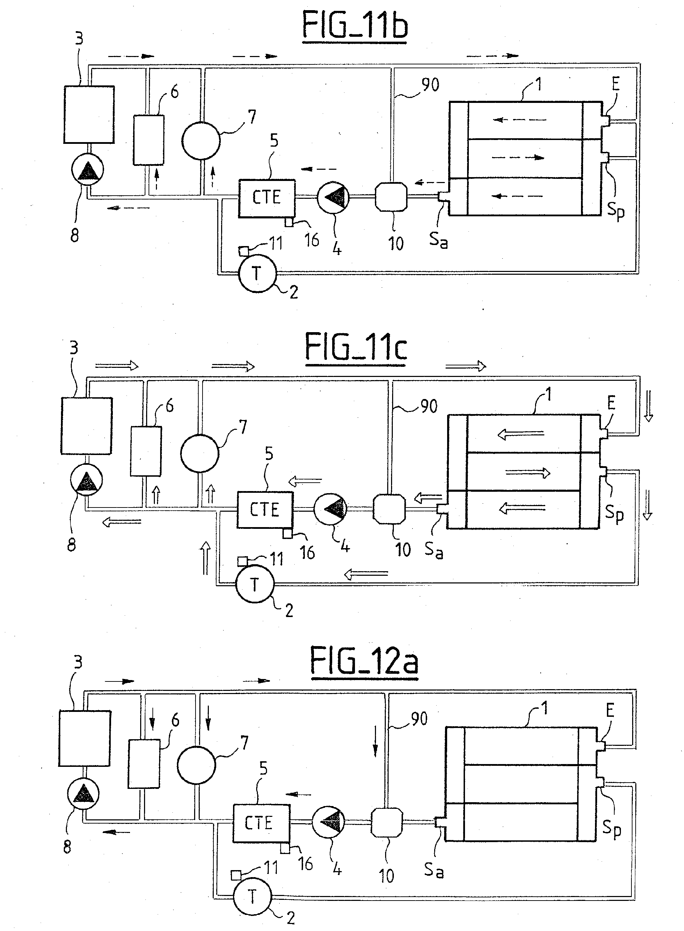

La figure 11ₐ concerne le mode électrique pur à froid. Même lors d'un démarrage à froid, une circulation de liquide de refroidissement est nécessaire au niveau des composants électroniques. C'est pourquoi la pompe électrique 4 est immédiatement mise en fonction. La vanne 10 à trois voies empêchant la circulation du liquide dans le radiateur 1, la circulation du liquide au voisinage de la chaîne de traction électrique, qui constitue une source de chaleur, sert au préchauffage du moteur thermique 3 et à la fourniture de chaleur au niveau de l'aérotherme assurant le chauffage de l'habitacle. Le sens de circulation du liquide est symbolisé par des flèches en traits pleins.

En mode électrique pur à chaud (figure 11_{b}), lorsque la température en entrée des composants atteint 80°C, il est nécessaire de refroidir le liquide au niveau des composants. Contrairement à la figure précédente, la vanne 10 empêche le liquide provenant du moteur d'aller vers ces composants et autorise son passage dans le radiateur 1 où il est refroidi dans les deux parties, car la température au niveau de la première sortie Sp du radiateur n'est pas suffisamment élevée pour permettre l'ouverture du thermostat 2. Le sens de circulation du liquide est symbolisé par des flèches en traits pointillés.

La figure 11_{c} concerne un cas de fonctionnement assez rare, celui du mode électrique pur à chaud avec ouverture du thermostat 2. La différence avec le mode électrique pur à chaud précédemment décrit est due à la température en sortie Sp de la première partie du radiateur qui atteint la température d'ouverture du thermostat. Ce cas peut se produire lors d'un fonctionnement très long en mode électrique pur, à très faible vitesse et à température extérieure élevée, provoquant une faible efficacité du radiateur, ou lors d'un fonctionnement en mode électrique pur après un roulage, hybride ou thermique pur, pendant lequel le thermostat 2 se serait ouvert. Le sens de circulation du liquide est symbolisé par des flèches en traits doubles.

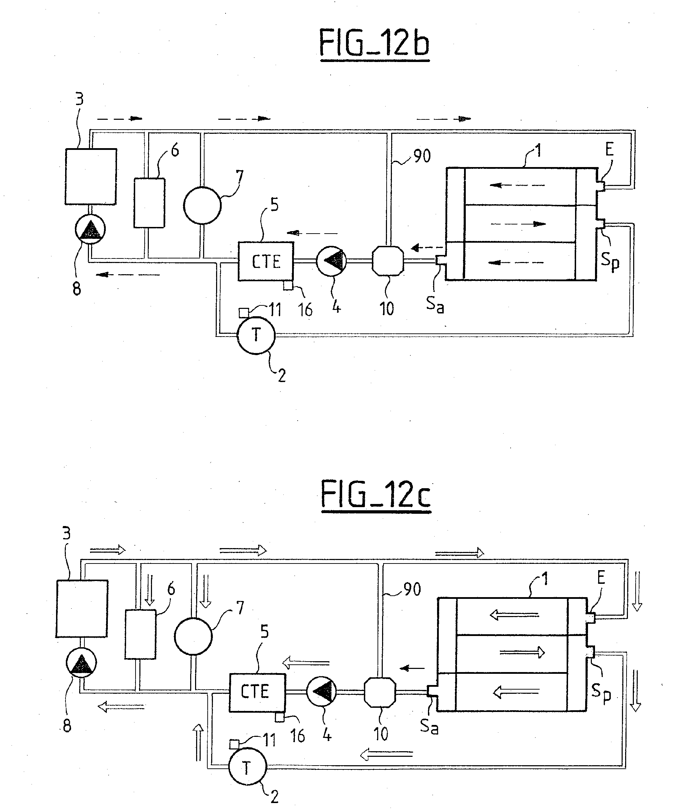

Les figures 12ₐ, 12_{b} et 12_{c} concernent le mode hybride. Dans le cas du mode hybride à froid, après un démarrage à froid (figure 12ₐ), la pompe électrique 4 ne fonctionne pas et seule la pompe mécanique 8 assure la circulation du liquide de refroidissement dans le circuit. Comme la température en entrée des composants électriques 5 est inférieure à 80°C, la vanne 10 à trois voies laisse passer le liquide de refroidissement de la sortie du moteur thermique 3 vers la chaîne de traction électrique 5 d'une part et l'empêche de circuler dans le radiateur 1 pour y être refroidi. Le sens de circulation du liquide est symbolisé par des flèches en traits pleins. Ainsi, ce mode de fonctionnement permet d'augmenter la température du liquide par la chaleur induite par les composants électroniques et les moteurs électriques de la chaîne de traction, réalisant une montée en température du moteur thermique et de l'habitacle plus rapide juste après le démarrage.

Dans le cas du mode hybride à chaud, c'est-à-dire lorsque le moteur thermique est chaud, il faut refroidir le liquide en entrée de la chaîne de traction électrique car sa température en sortie du moteur thermique est supérieure à 80°C. La vanne 10 bloque son passage direct vers les composants électroniques et l'oblige à circuler dans le radiateur 1 pour y être suffisamment refroidi à la deuxième sortie Sₐ. Dans le cas particulier de la figure 12_{b}, la température du liquide à la première sortie Sₚ du radiateur n'a pas atteint la température d'ouverture du thermostat 2, de sorte que la chaîne de traction électrique 5 et le moteur thermique 3 sont refroidis par le liquide en deuxième sortie Sₐ dont le débit est suffisant pour ne pas nécessiter la mise en fonctionnement de la pompe électrique 4. Le sens de circulation du liquide est symbolisé par des flèches en traits pointillés.

Dans le cas particulier de la figure 12_{c} par contre, appelé mode hydride à chaud avec refroidissement critique, la température d'ouverture du thermostat 2 est atteinte par le liquide de refroidissement en première sortie Sp du radiateur 1, de sorte que le liquide refroidi dans la première partie du radiateur sort par cette sortie Sₚ pour être envoyé vers le moteur thermique. Afin que le débit du liquide en deuxième sortie Sₐ soit suffisant pour refroidir les éléments de la chaîne de traction électrique, la pompe électrique 4 est mise en route. Le sens de circulation du liquide est symbolisé par des flèches en traits doubles.

Le système de refroidissement selon l'invention permet une montée en température rapide du moteur thermique et une très bonne stabilité de la température du fluide de refroidissement ces composants de la chaîne de traction électrique, dont la durée de vie est ainsi augmentée. De plus, l'intégration d'une vanne à trois voies dans le radiateur de refroidissement permet d'économiser de la place sous le capot du véhicule et de gagner du temps au montage.

## Revendications

1. Système de refroidissement pour chaîne de traction hybride de véhicule comprenant un moteur thermique et une chaîne de traction électrique, dans lequel circule un fluide de refroidissement des moteurs, refroidi dans un radiateur composé d'une part d'un circuit principal à plusieurs passes de multiples canaux parallèles reliés par des boîtes à eau et dédié au refroidissement du moteur thermique et possédant une entrée reliée à la sortie du moteur thermique et une sortie principale reliée à l'entrée dudit moteur thermique, et d'autre part d'un circuit auxiliaire dédié au refroidissement de la chaîne de traction électrique, relié au circuit principal et constitué également de plusieurs passes dont la sortie auxiliaire permet le passage du fluide, refroidi à une température inférieure à celle de la sortie principale, vers la chaîne de traction électrique, **caractérisé en ce que** ledit radiateur (1) possède de plus une branche de dérivation (9) du liquide provenant du moteur thermique (3) reliant l'entrée (E) à une première entrée d'une vanne (10) mélangeuse à trois voies, placée au niveau de la sortie auxiliaire (Sₐ) et recevant par une deuxième entrée le fluide refroidi provenant du circuit auxiliaire, et assurant le passage sélectif du fluide destiné au refroidissement de la chaîne de traction électrique (5) par la sortie auxiliaire.

2. Système de refroidissement selon la revendication 1, **caractérisé en ce que** le circuit principal du radiateur (1), dédié au refroidissement du moteur thermique (3), et le circuit auxiliaire dédié au refroidissement de la chaîne de traction électrique (5) ont chacun un nombre pair de passes de telle sorte que les deux sorties principale (Sₚ) et auxiliaire (Sₐ) du radiateur sont situées du même côté du radiateur et **en ce que** la branche de dérivation (9) du fluide est interne au radiateur, réalisée par une cloison parallèle aux boîtes à eau assurant le passage du fluide provenant du moteur thermique (3) de l'entrée (E) du radiateur (1) vers la vanne mélangeuse (10).

3. Système de refroidissement selon la revendication 1, **caractérisé en ce que** le circuit principal du radiateur (1), dédié au refroidissement du moteur thermique (3), et le circuit auxiliaire dédié au refroidissement de la chaîne de traction électrique (5) ont chacun un nombre impair de passes de telle sorte que les deux sorties principale (Sₚ) et auxiliaire (Sₐ) du radiateur sont situées du même côté du radiateur et **en ce que** la branche de dérivation (9) du fluide est interne au radiateur, réalisée par une cloison parallèle aux boîtes à eau assurant le passage du fluide provenant du moteur thermique (3) de l'entrée (E) du radiateur (1) vers la vanne mélangeuse (10).

4. Système de refroidissement selon la revendication 1, **caractérisé en ce que** la sortie (Sₐ) du circuit de refroidissement auxiliaire du radiateur (1) est placée du côté opposé à l'entrée (E) du fluide provenant du moteur thermique (3), en raison de la différence de parité du nombre de passes entre les deux circuits principal et auxiliaire de refroidissement, et **en ce que** la branche de dérivation (9) du liquide est réalisée par un raccord spécifique extérieur au radiateur (1) entre la sortie du moteur thermique (3) et la vanne mélangeuse (10).

5. Système de refroidissement selon la revendication 1 à 4, **caractérisé en ce que** le nombre de passes des circuits principal et auxiliaire du radiateur (1) est déterminé par l'architecture hybride du véhicule et la puissance dissipée par les composants de la chaîne de traction électrique (5).

6. Système de refroidissement selon la revendication 1, **caractérisé en ce que** la vanne (10) mélangeuse est constituée d'un boîtier (31) rigide et étanche à deux entrées (32,33) opposées et perpendiculaires à une sortie (34), une première entrée (33) recevant le fluide provenant du moteur thermique et la seconde entrée (32) recevant le fluide provenant du circuit auxiliaire de refroidissement du radiateur (1), dans lequel est logé un thermostat à cire (100) comprenant deux clapets (21,22) disposés aux deux extrémités d'un bulbe à cire (20), se déplaçant le long d'une tige (23) solidaire du boîtier sous l'effet de la température du fluide baignant le bulbe, et disposés perpendiculairement à cette tige, destinés à faire varier progressivement et inversement les flux venant simultanément par les deux entrées (32,33) pour réguler la température du fluide de refroidissement en sortie 34 du boîtier 31 vers la chaîne de traction électrique.

7. Système de refroidissement selon la revendication 6, **caractérisé en ce que** le siège (28) du clapet (21), destiné à fermer l'arrivée du fluide provenant du moteur thermique (3), a une forme spécifique assurant une bonne circulation du fluide autour du bulbe à cire (20), obtenue par une rondelle solidaire de l'entrée (33) du boîtier (31) associée à un tronc de cône.

8. Système de refroidissement selon la revendication 6, **caractérisé en ce que** le fluide refroidi par le circuit auxiliaire continuant à refroidir le bulbe jusqu'à une température suffisante au bon refroidissement de la chaîne de traction électrique qu'il atteint en passant par la sortie (34), la circonférence intérieure de la rondelle formant le siège (28) du clapet (21) du thermostat à cire est dotée d'un joint de caoutchouc (29) assurant l'étanchéité de la fermeture par le clapet (21) de l'entrée (33) du fluide provenant du moteur (3).

9. Système de refroidissement selon l'une des revendications 6 à 8, **caractérisé en ce que** le fonctionnement de la vanne (10) mélangeuse est le suivant en fonction de la température du fluide provenant du moteur thermique (3) :
- quand ladite température est inférieure à un seuil déterminé en-dessous duquel la cire est solide, un des clapets (22) à une extrémité du bulbe de cire (20) est en position de butée contre un siège (26) solidaire du boîtier (31), obstruant complètement l'arrivée du fluide refroidi par le circuit auxiliaire du radiateur (1 ), l'autre clapet (21) ouvrant l'entrée (33) au liquide provenant du moteur thermique (3) qui vient baigner le bulbe avant de passer par la sortie (34) du boîtier vers la chaîne de traction électrique (5) ;
- quand ladite température du fluide est supérieure au seuil prédéterminé au-dessus duquel la cire se dilate, le bulbe (20) se déplace le long de la tige (23), en décollant progressivement le clapet (22) de son siège (26) pour augmenter le fluide refroidi par le circuit auxiliaire, et simultanément en rapprochant le clapet (21) de son siège (28) pour diminuer le débit du fluide provenant du moteur thermique, jusqu'à obtenir une température du mélange au niveau du bulbe suffisante pour assurer le bon refroidissement de la chaîne de traction électrique (5) ;
- quand la température du fluide augmente, le bulbe continue son déplacement jusqu'à la fermeture complète de l'arrivée (33) du liquide chaud provenant du moteur thermique par le clapet (21) en butée contre son siège (28), le fluide refroidi par le circuit auxiliaire continuant à refroidir le bulbe jusqu'à une température suffisante au bon refroidissement de la chaîne de traction électrique qu'il atteint en passant par la sortie (34).

10. Système de refroidissement selon la revendication 1, **caractérisé en ce que** la vanne (10) mélangeuse est constituée de deux thermostats à cire (50 et 51), logés selon le même axe (Δ) de déplacement dans un boîtier (31) à deux entrées opposées (32 et 33) et une sortie (34) par laquelle circule le fluide de refroidissement destiné à la chaîne de traction électrique, chacun des thermostats (50 et 51) étant doté d'un clapet (60), respectivement (61), destiné à buter contre un siège (62), respectivement (63), pour fermer alternativement les entrées (33 et 32) de la vanne et les deux sièges (62 et 63) étant parallèles, solidaires du boîtier (31) de la vanne et disposés de part et d'autre de la sortie (34).

11. Système de refroidissement selon la revendication 10, **caractérisé en ce que** le fonctionnement de la vanne (10) mélangeuse est le suivant en fonction de la température du fluide provenant du moteur thermique (3) :
- lorsque la température du liquide est inférieure au seuil de dilatation de la cire, la cire des bulbes (20) est solide et le premier thermostat (51) situé dans l'axe de l'entrée (33) de ce liquide est ouvert, positionné de telle sorte que son clapet (61) n'est pas en butée de son siège (63) pour laisser passer le liquide vers la sortie (34) après avoir baigné le bulbe à cire ; simultanément, le second thermostat (50) est fermé, positionné de telle sorte que son clapet (60) soit en butée de son siège (62) pour obstruer totalement l'arrivée (32) du fluide refroidi par le radiateur ;
- lorsque la température du fluide s'élève au-dessus du seuil de dilatation de la cire, les deux bulbes (20) de cire se déplacent l'un vers l'autre pour permettre le mélange des deux fluides chaud et refroidi, qui va refroidir les composants électroniques de la chaîne de traction (5) ;
- quand la température est trop élevée, le thermostat (51) ferme l'entrée (33) et le thermostat (50) ouvre l'entrée (32) afin que seul le fluide refroidi par le circuit auxiliaire du radiateur arrose la cire des deux bulbes.

12. Système de refroidissement selon l'une des revendications 1 à 11, **caractérisé en ce que**, dans le cas du mode de fonctionnement hybride à froid, après un démarrage à froid du moteur thermique, la température en entrée des composants électriques (5) étant inférieure à 80°C, la vanne (10) à trois voies laisse passer le liquide de refroidissement de la sortie du moteur thermique (3) vers la chaîne de traction électrique (5) d'une part et l'empêche de circuler dans le radiateur (1) pour y être refroidi, afin d'augmenter la température du liquide par la chaleur induite par les composants électroniques et les moteurs électriques de la chaîne de traction, réalisant une montée en température du moteur thermique et de l'habitacle plus rapide juste après le démarrage.

13. Système de refroidissement selon l'une des revendications 1 à 11, **caractérisé en ce que**, dans le cas du mode hybride à chaud, c'est-à-dire lorsque le moteur thermique est chaud, nécessitant le refroidissement du liquide en entrée de la chaîne de traction électrique car sa température en sortie du moteur thermique est supérieure à 80°C, la vanne (10) à trois voies bloque son passage direct vers les composants électroniques et l'oblige à circuler dans le radiateur (1) pour y être suffisamment refroidi à la deuxième sortie (Sₐ).
